# EUROPÄISCHE PATENTSCHRIFT

(11) **EP 0 906 926 B1**
(45) Veröffentlichungstag und Bekanntmachung des Hinweises auf die Patenterteilung: **05.12.2001**
(21) Anmeldenummer: 98114990.9
(22) Anmeldetag: 10.08.1998
(51) Int. Cl.: C08G 18/10, C08G 18/76

(54) **Verfahren zur Herstellung von Polyurethan-Weichschaumstoffen**
Process for the manufacture of flexible polyurethane foams
Procedure pour la manufacture de mousses de polyurethane flexibles

(30) Priorität: 16.08.1997 DE 19735488
(43) Veröffentlichungstag der Anmeldung: 07.04.1999
(73) Patentinhaber: BASF AKTIENGESELLSCHAFT, 67056 Ludwigshafen (DE)
(72) Erfinder: Lutter, Heinz-Dieter, Dr., 69151 Neckargemünd (DE); Bruchmann, Bernd, Dr., 67251 Freinsheim (DE); Wenzel, Marion, 67071 Ludwigshafen (DE); Wagner, Klaus, 67258 Hessheim (DE)

(56) Entgegenhaltungen:
- EP-A- 0 152 878
- EP-A- 0 409 035
- EP-A- 0 555 742
- DE-A- 2 456 591

## Beschreibung

Die Erfindung betrifft ein Verfahren zur Herstellung von Polyurethan-Weichschaumstoffen auf Basis von Diphenylmethan-Diisocyanat und Polyesterpolyolen.

Polyurethan-Weichschaumstoffe sind seit langem bekannt und vielfach in der Literatur beschrieben. Ihre Herstellung erfolgt üblicherweise durch Umsetzung von Polyisocyanaten mit Verbindungen, die zwei oder mehr aktive Wasserstoffatome im Molekül aufweisen.

Als Polyisocyanate zur Herstellung von Polyurethan-Weichschaumstoffen wird zumeist Toluylendiisocyanat (TDI), häufig jedoch auch Diphenylmethandiisocyanat (MDI), eingesetzt. Als Verbindungen mit mindestens zwei aktiven Wasserstoffatomen werden zur Herstellung von Polyurethan-Weichschaumstoffen zumeist zwei-und/oder drei funktionelle Polyetherole und/oder Polyesterole mit Hydroxylzahlen im Bereich von etwa 20 bis 100 mg KOH/g eingesetzt.

Für bestimmte Einsatzgebiete, beispielsweise für die Herstellung von Schaumstoffverbunden mit textilen Materialien nach dem Verfahren der Flammkaschierung, ist es vorteilhaft, als Polyole Polyesterole einzusetzen. Die so hergestellten Polyurethane weisen eine höhere Schmelzklebrigkeit auf, wodurch es zu einer besseren Haftung zwischen Polyurethan und dem Textilmaterial kommt.

Bei der Verwendung von MDI als Isocyanatkomponente kommt es beim Einsatz von Polyesterolen häufig zu Verarbeitungsproblemen. Da das MDI als Feststoff schwierig zu verarbeiten ist, wird es zumeist durch chemische Umsetzungen verflüssigt. Ein häufig eingesetztes Verfahren zur Verflüssigung von MDI ist die Umsetzung mit Polyolen zu isocyanatterminierten Prepolymeren. Ein derartiges Prepolymer ist in DE-A-44 11 781 beschrieben. Hierbei handelt es sich um ein Umsetzungsprodukt einer Mischung aus Diphenylmethan-diisocyanat und Polyphenylenpolymethylenpolyisocyanaten (Roh-MDI) mit mindestens einem trifunktionellen Polyoxypropylenpolyol. Dieses Prepolymer wird mit einer Polyolkomponente zu Polyurethan-Weichschaumstoffen umgesetzt. Obwohl in DE-A-44 11 781 die Verwendung von Polyesterpolyolen als Polyolkomponente genannt wird, werden in den Beispielen nur Polyetherpolyole als Polyolkomponente beschrieben.

Es hat sich gezeigt, daß die Verwendung von Polyesterolen als Polyolkomponente bei der Umsetzung mit Isocyanatgruppen enthaltenden Prepolymeren, die durch Umsetzung von MDI und insbesondere von Roh-MDI mit Polyetherolen hergestellt wurden, zu Verarbeitungsproblemen und Schaumstoffen minderer Qualität, sofern überhaupt Schaumstoffe entstanden, führte. Die Schaumstoffe waren zumeist geschlossenzellig, schrumpften stark, und es kam häufig zum sogenannten Kollaps, einem vollständigen Zusammenfall des Reaktionsproduktes unmittelbar nach dem Aufschäumen.

Der Erfindung lag die Aufgabe zugrunde, Polyurethan-Weichschaumstoffe auf Basis von Polyesterolen und MDI herzustellen, die offenzellig und dimensionsstabil sind, über gute mechanische Eigenschaften verfügen und durch Flammkaschierung mit textilen Materialien beschichtet werden können.

Die Aufgabe konnte überraschenderweise gelöst werden durch ein Verfahren zur Herstellung von Polyurethan-Weichschaumstoffen durch Umsetzung von Polyisocyanaten mit Polyolen, wobei als Polyisocyanate Prepolymere aus der Umsetzung von Gemischen aus Diphenylmethandiisocyanat und Polymethylenpolyphenylenpolyisocyanaten mit Polyetherolen, als Polyole Polyesterpolyole eingesetzt werden und die Umsetzung in Anwesenheit einer Verbindung, die Siliziumatome und Polyetherketten enthält, durchgeführt wird.

Gegenstand der Erfindung ist demzufolge ein Verfahren zur Herstellung von Polyurethan-Weichschaumstoffen durch Umsetzung von
a) Polyisocyanaten mit
b) Verbindungen mit mindestens zwei aktiven Wasserstoffatomen in Anwesenheit von
c) Treibmitteln
d) Katalysatoren sowie
e) Hilfs- und/oder Zusatzstoffen,
dadurch gekennzeichnet, daß als Polyisocyanate a) Isocyanat- und Urethangruppen enthaltende Prepolymere aus der Umsetzung von Diphenylmethandiisocyanat und Polyphenylpolymethylenpolyisocyanaten mit Polyetherpolyolen, als Verbindung mit mindestens zwei aktiven Wasserstoffatomen b) Polyesterpolyole sowie als Hilfs- und/oder Zusatzstoffe e) Verbindungen, die Siliziumatome und Polyetherketten enthalten, verwendet werden.

Die Isocyanatgruppen enthaltenden Prepolymeren aus der Umsetzung von MDI und seinen höheren Homologen mit Polyetherpolyolen haben vorzugsweise einen NCO-Gehalt von 22 bis 30 Gew.-% und sind bei Raumtemperatur flüssig.

Einsatzprodukte zur Herstellung der Isocyanatgruppen enthaltenden Prepolymeren sind auf der Isocyanatseite vorzugsweise Gemische aus Diphenylmethandiisocyanatisomeren und Polymethylenpolyphenylpolyisocyanaten, zumeist als Roh-MDI bezeichnet. Insbesondere eingesetzt werden Gemische, die
a1) 45 bis 65 Gew.-% 4,4'-Diphenylmethan-diisocyanat,
a2) 10 bis 50 Gew.-% 2,4'-Diphenylmethan-diisocyanat,
a3) 0 bis 1 Gew.-% 2,2'-Diphenylmethan-diisocyanat und
a4) 45 bis 1 Gew.-% mindestens trifunktionelle Polyphenylpolymethylen-polyisocyanate enthalten.

Derartige Produkte sowie ihre Herstellung werden in DE-A-44 11 781 beschrieben.

Als Polyetherpolyole werden vorzugsweise trifunktionelle Polyetherpolyole eingesetzt, insbesondere reine Polyoxypropylenpolyole. Die Hydroxylzahl der Polyetherpolyole beträgt 20 bis 60 mg KOH/g.

Die erfindungsgemäß als Komponente b) verwendeten Polyester-polyole werden hergestellt durch Umsetzung von mindestenszweifunktionellen Alkoholen mit mindestens zweifunktionellen Carbonsäuren.

Die erfindungsgemäß eingesetzten Polyesterpolyole sind vorzugsweise difunktionell, gegebenenfalls leicht verzweigt, und haben eine Hydroxylzahl im Bereich von 10 bis 100 mg KOH/g.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Alkanoldiolen, mit 2 bis 12 Kohlenstoffatomen, vorzugsweise 2 bis 6 Kohlenstoffatomen und/ oder Dialkylen-glykolen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Alkandiole, Dialkylenglykole und Triole sind:

Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Alkandiole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Caprolacton oder Hydroxycarbonsäuren, z.B. ω-Hydroxycarbonsäure.

Zur Herstellung der Polyesterpolyole können die organischen, z.B. aromatischen und vorzugsweise aliphatischen Polycarbonsäuren und/ oder -derivate und mehrwertigen Alkohole und/oder Dialkylenglykole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs-und/oder Schleppmitteln, wie z.B. Benzol, Toluol, Xylol oder Chlorbenzol, zur azeotropen Abdestillation des Kondensationswassers durchgeführt werden. Zur Herstellung foggingarmer Polyester-polyole können die erhaltenen Polyesterpolyole mindestens einer zusätzlichen Destillation unter vermindertem Druck, z.B. in einem Dünnschicht- und/oder Fallstromverdampfer, unterworfen werden.

Zur Herstellung der Polyesterpolyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyesterpolyole besitzen eine Funktionalität von vorzugsweise 2 bis 4, insbesondere 2 bis 3 und ein Molekulargewicht von 1800 bis 3600, vorzugsweise von 2200 bis 3200.

Zu den übrigen Einsatzstoffen des erfindungsgemäßen Verfahrens ist im einzelnen folgendes zu sagen.

Als Treibmittel c) zur Herstellung der PU-Weichschaumstoffe findet insbesondere Wasser Verwendung, das mit Isocyanatgruppen unter Bildung von Kohlendioxid reagiert. Die Wassermengen, die zweckmäßigerweise eingesetzt werden, betragen 0,1 bis 8 Gew.-Teile, vorzugsweise 2,5 bis 6,0 Gew.-Teile und insbesondere 3,3 bis 4,3 Gew.-Teile, bezogen auf 100 Gew.-Teile der Polyhydroxylverbindungen (b).

Als Treibmittel geeignet sind ferner Flüssigkeiten, welche gegenüber der flüssigen, mit Urethangruppen modifizierten Polyisocyanatmischung (a) inert sind und Siedepunkte unter 80°C, vorzugsweise unter 50°C, insbesondere zwischen -50°C und 30°C bei Atmosphärendruck aufweisen, so daß sie unter dem Einfluß der exothermen Polyadditionsreaktion verdampfen sowie Mischungen aus solchen physikalisch wirkenden Treibmitteln und Wasser. Beispiele derartiger, vorzugsweise verwendbarer Flüssigkeiten sind Alkane, wie z.B. Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie z.B. Furan, Dimethylether und Diethylether, Ketone, wie z.B. Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlor-difluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und andere carboxylgruppenhaltige Verbindungen.

Als Treibmittel vorzugsweise Verwendung finden Chlordifluormethan, Chlordifluorethane, Dichlorfluorethane, Pentangemische, Cyclopentan, Cyclohexan und insbesondere Wasser sowie Mischungen aus mindestens zwei dieser Treibmittel, z.B. Mischungen aus wasser und Cyclopentan und/oder Cyclohexan, Mischungen aus Chlordifluormethan und 1-Chlor-2,2-difluorethan und gegebenenfalls Wasser. Als Treibmittel nicht verwendet werden Fluorchlorkohlenwasserstoffe, die die Ozonschicht schädigen.

Die erforderliche Menge an physikalisch wirkenden Treibmitteln kann in Abhängigkeit von der gewünschten Schaumstoffdichte und der gegebenenfalls eingesetzten Wassermenge auf einfache Weise experimentell ermittelt werden und beträgt ungefähr 0 bis 25 Gew.-Teile, vorzugsweise 0 bis 15 Gew.-Teile pro 100 Gew.-Teile der Polyhydroxylverbindungen (b). Gegebenenfalls kann es zweckmäßig sein, die Urethangruppen gebunden enthaltenden Polyisocyanatmischungen (a) mit dem inerten physikalisch wirkenden Treibmittel zu mischen und dadurch ihre Viskosität zu verringern.

Als Katalysatoren (d) zur Herstellung der erfindungsgemäßen Weichschaumstoffe werden vorzugsweise Verbindungen verwendet, die die Reaktion der Hydroxylgruppen enthaltenden Verbindungen der Komponente (b) mit den flüssigen, Urethangruppen gebunden enthaltenden Polyisocyanatmischungen auf MDI-Basis (a) stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und Dialkylzinn-(IV)-salze von organischen Carbonsäuren, z.B. Dibutyl-zinndiacetat, Dibutylzinndilaurat, Dibutylzinn-maleat und Dioctylzinn-Diacetat und stark basische Amine, beispielsweise Amidine, wie z.B. 2,3-Dimethyl-3,4,5,6-tetrahydropyrimidin, tertiäre Amine, wie z.B. Triethylamin, Tributylamin, Dimethylbenzylamin, N-Ethyl, N-Cyclohexylmorpholin, N,N,N',N'-Tetramethylethylendiamin, N,N,N',N'-Tetramethylbutandiamin, N,N,N',N'-Tetramethyl-hexandiamin-1,6, Di-(4-dimethylaminocyclohexyl)-methan-Pentamethyldiethylentriamin, Tetramethyl-di(aminoethyl)ether, Bis-(dimethylaminopropyl-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

Als Katalysatoren kommen ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen und Kombinationen aus den organischen Metallverbindungen und stark basischen Aminen. Als Katalysatoren kommen ferner Derivate des Morpholins, wie N-Methyl- oder N-Ethylmorpholin, in Frage. Vorzugsweise verwendet werden 0,001 bis 5 Gew.-%, insbesondere 0,05 bis 2 Gew.-% Katalysator bzw. Katalysatorkombination bezogen auf das Gewicht der Polyhydroxylverbindung (b).

Die Reaktionsmischung zur Herstellung der PU-Weichschaumstoffe enthält auch noch Zusatzstoffe (e). Erfindungsgemäß enthält die Reaktionsmischung, wie oben ausgeführt, Siliziumatome und Polyetherketten enthaltende Verbindungen. Diese werden vorzugsweise in einer Menge von 0,5 bis 5 Gew.-%, bezogen auf die Komponente b), eingesetzt. Bei diesen Verbindungen handelt es sich um Silicon-Polyether-Copolymere. Die Produkte haben ein durchschnittliches Molekulargewicht (M_{w}) von etwa 8000, wobei die Molekulargewichtsverteilung relativ breit ist. Die Siloxankette ist durchschnittlich etwa 40 (CH₃)₂SiO-Einheiten lang und enthält durchschnittlich 5 angeknüpfte Polyetherketten. Die Polyetherketten bestehen vorzugsweise aus Ethylenoxid und Propylenoxid im Verhältnis 1:1 und weisen endständig eine Hydroxylgruppe auf. Das Molekulargewicht der Polyetherketten liegt bei etwa 1500.

Derartige Produkte sind handelsüblich und werden beispielsweise von der Firma Goldschmidt AG unter der Bezeichnung Tegostab® vertrieben.

Weitere Zusatzstoffe e) sind beispielsweise oberflächenaktive Substanzen, Schaumstabilisatoren, Zellregler, Füllstoffe, Farbstoffe, Pigmente, Flammschutzmittel, Hydrolyseschutzmittel, fungistatisch und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl-bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Polyhydroxylverbindung (b), angewandt.

Als Füllstoffe, insbesondere verstärkend wirkende Füllstoffe, sind die an sich bekannten, üblichen organischen und anorganischen Füllstoffe, Verstärkungsmittel und Beschwerungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chroysotil, Zeolithe, Talkum; Metalloxide, wie z.B. Kaolin, Aluminimoxide, Titanoxide und Eisenoxide, Metallsalze wie z.B. Kreide, Schwerspat Aluminiumsilikate und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden als Reaktionsmischung vorteilhafterweise in Mengen von 0,5 bis 50 Gew.-%, vorzugsweise 1 bis 40 Gew.-%, bezogen auf das Gewicht der Komponenten (a) und (b) einverleibt.

Geeignete Flammschutzmittel sind beispielsweise Trikresylphosphat; Tris-(2-chlorethyl)phosphat, Tris-(2-chlorpropyl)phosphat, Tris-(1,3-dichlorpropyl)phosphat, Tris-(2,3-dibrompropyl)phosphat und Tetrakis-(2-chlorethyl)-ethylen-diphosphat.

Außer den bereits genannten halogensubstituierten Phosphaten können auch anorganische Flammschutzmittel, wie roter Phosphor, Aluminiumoxihydrat, Antimontrioxid, Arsenoxid, Ammoniumsulfat, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammfestmachen der erfindungsgemäß hergestellten PU-Weich(form)-schaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) und (b) zu verwenden.

Nähere Angaben über die oben genannten anderen üblichen Hilfs-und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1., 2. und 3. Auflage, 1966, 1983 und 1993, zu entnehmen.

Zur Herstellung der PU-Weichschaumstoffe können die flüssigen, Urethangruppen gebunden enthaltenden Polyisocyanatmischungen (a), Verbindungen mit mindestens zwei aktiven Wasserstoffatomen (b) in Gegenwart von Treibmitteln (c), Katalysatoren (d) und gegebenenfalls Zusatzstoffen (e) bei Temperaturen von z.B. 10 bis 100°C, vorzugsweise 18 bis 80°C in solchen Mengenverhältnissen zur Reaktion gebracht werden, daß pro NCO-Gruppe zweckmäßigerweise 0,5 bis 2, vorzugsweise 0,8 bis 1,3 und insbesondere ungefähr ein reaktive(s) Wasserstoffatom(e) gebunden an die Ausgangskomponente (b) vorliegen und, sofern Wasser als Treibmittel verwendet wird, das Molverhältnis von Äquivalente Wasser zu Äquivalente NCO-Gruppe vorteilhafterweise 0,5 bis 5:1, vorzugsweise 0,7 bis 0,95:1 und insbesondere 0,75 bis 0,85:1 beträgt.

Die PU-Weichschaumstoffe werden zweckmäßigerweise nach der Mehrkomponentenverschäumung hergestellt, wobei die Ausgangskomponenten (b), (c), (d) und (e) getrennt voneinander im Mischkopf einer Hoch- oder Niederdruckmaschine vereinigt und als Polyisocyanat-Komponente die Urethangruppen gebunden enthaltende Polyisocyanatmischung, gegebenenfalls im Gemisch mit (c) verwendet werden. Die Reaktionsmischung kann in offenen oder geschlossenen Formwerkzeugen verschäumt werden; sie eignet sich ferner zur Herstellung von Formschaumstoffen.

Zur Herstellung von PU-Weichformschaumstoffen wird die Reaktionsmischung vorteilhafterweise mit einer Temperatur von 18 bis 80°C, vorzugsweise 30 bis 65°C in ein zweckmäßigerweise metallisches temperierbares Formwerkzeug eingebracht. Die Formwerkzeugtemperatur beträgt üblicherweise 20 bis 90°C, vorzugsweise 35 bis 70°C. Die Reaktionsmischung läßt man unter Verdichtung z.B. bei Verdichtungsgraden von 1,1 bis 8, vorzugsweise von 2 bis 6 und insbesondere 2,2 bis 4 in dem geschlossenen Formwerkzeug aushärten.

Die PU-Weichschaumstoffe besitzen üblicherweise freigeschäumte Dichten von z.B. 20 bis 60 g/l vorzugsweise von 40 bis 55 g/l und insbesondere von 45 bis 52 g/l. Aus derartigen Schaumstoff-Formulierungen hergestellte PU-Weichschaumstoff-Formkörper können in Abhängigkeit vom angewandten Verdichtungsgrad eine Gesamtdichte von 36 bis 55 g/l, vorzugsweise von 45 bis 50 g/l aufweisen.

Die nach dem erfindungsgemäßen Verfahren hergestellten PU-Weichschaumstoffe eignen sich z.B. als Sitzpolster für Polstermöbel, die PU-Formweichschaumstoffe als Polsterelemente, Armlehnen, Kopfstützen, Sonnenblenden und Sicherheitsabdeckungen in Fahrzeugkabinen, vorzugsweise in Kraftfahrzeugen und Flugzeugen.

Die Weichschaumstoffe können nach dem Verfahren der Flammkaschierung mit textilen Materialien stabil verbunden werden.

Die Erfindung soll an nachstehenden Beispielen näher erläutert werden:

### Beispiele 1 bis 7

Die in Tabelle 1 angegebenen Komponenten wurden zu einer Polyolkomponente vereinigt und mit einem Prepolymeren aus der Umsetzung von 37,4 Gew.-Teilen 4,4'-Diphenylmethandiisocyanat, 37,4 Gew.-Teilen 2,4'-Diphenylmethandiisocyanat, 12,4 Gew.-Teilen eines Gemisches aus Diphenylmethanisomeren und Polymethylenpolyphenylenpolyisocyanaten (Roh-MDI) und 12,9 Gew.-Teilen eines Polyoxypropylenpolyols mit einer Hydroxylzahl von 42 mg KOH/g mit einem NCO-Gehalt von 28,5 Gew.-% unter Einhaltung der in Tabelle 1 angegebenen Indices mittels einer Cannon-Viking-Niederdruckschäummaschine verschäumt.

Die erhaltenen Schäume wiesen die in Tabelle 2 dargestellten Kennwerte auf.

Es ist ersichtlich, daß die Schaumstoffe mit steigender Menge des Stabilisators eine steigende Dehnung und Zugfestigkeit aufweisen, ohne daß es zu einer Beeinträchtigung der übrigen Kennwerte kommt.

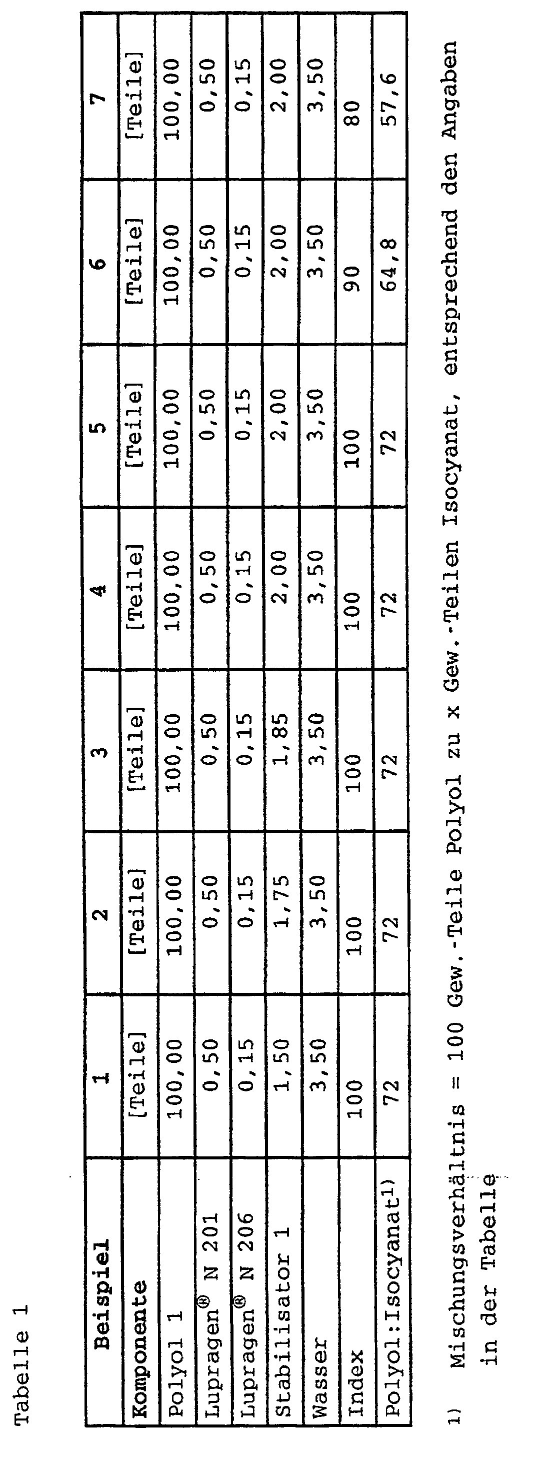

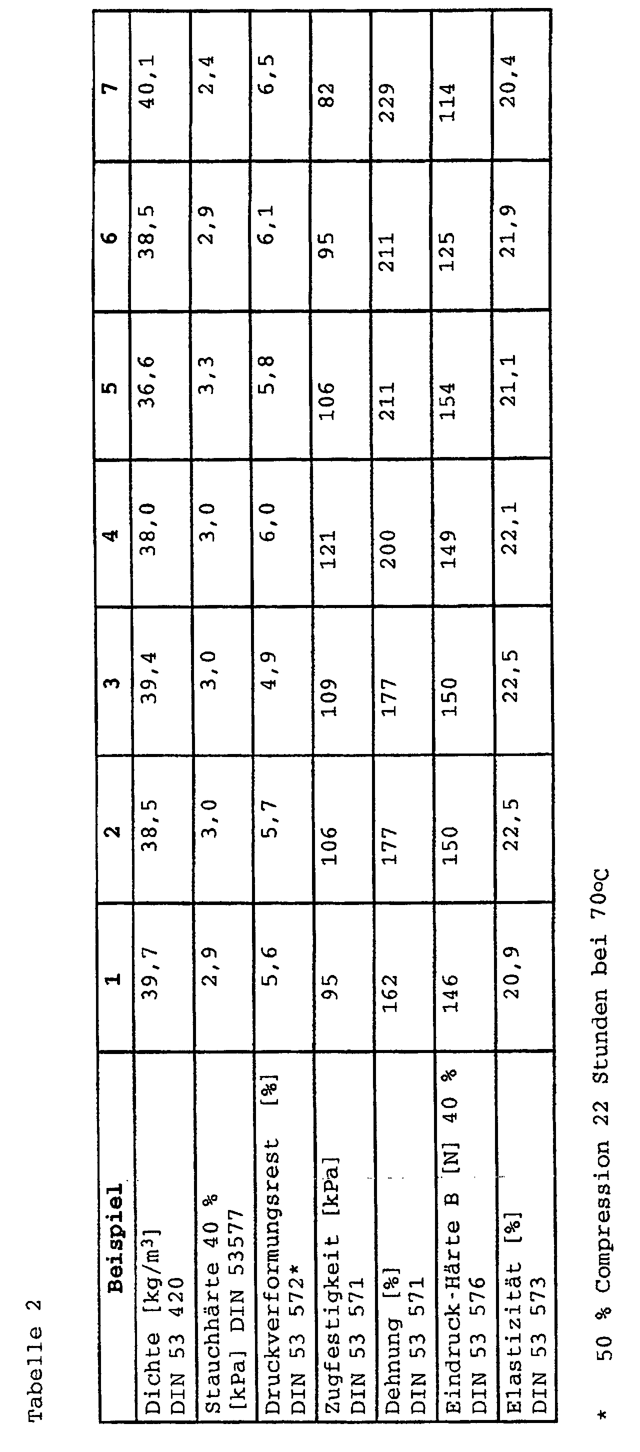

### Beispiele 8 bis 12

Es wurde verfahren wie in Beispiel 1 bis 7, die genauen Mengenverhältnisse der Einsatzstoffe sind in Tabelle 4 und die Kennwerte der Schaumstoffe in Tabelle 5 angegeben.

**Tabelle 4**

| Beispiel | 8 | 9 | 10 | 11 | 12 |
|---|---|---|---|---|---|
| Polyol 1 | 100,00 | 100,00 | 100,00 | 100,00 | 100,00 |
| Lupragen® N 201 | 0,62 | 0,62 | 0,62 | 0,62 | 0,62 |
| Lupragen® N 206 | 0,18 | 0,18 | 0,18 | 0,18 | 0,18 |
| Stabilisator 1 | 1,50 | 1,50 | 2,00 | 2,00 | 2,00 |
| Wasser | 4,50 | 4,50 | 4,50 | 4,50 | 4,50 |
| Index | 100 | 100 | 100 | 90 | 80 |
| Polyol:Isocyanat¹⁾ | 87,4 | 87,5 | 87,0 | 78,3 | 69,6 |

| | | | | | |
|---|---|---|---|---|---|
| ¹) Mischungsverhältnis = 100 Gew.-Teile Polyol zu x Gew.-Teilen Isocyanat, wie in der Tabelle angegeben | | | | | |

**Tabelle 5**

| Beispiel | 8 | 9 | 10 | 11 | 12 |
|---|---|---|---|---|---|
| Dichte [kg/m³] DIN 53 420 | 31,1 | 30,5 | 30,3 | 31,4 | 34,1 |
| Stauchhärte 40% [kPa] DIN 53 577 | 2,4 | 2,7 | 2,5 | 2,1 | 2,0 |
| Druckverformungsrest [%] ∗ DIN 53 572 | 13,7 | 13,9 | 10,8 | 13,7 | 11,5 |
| Zugfestigkeit [kPa] DIN 53 571 | 98 | 110 | 101 | 103 | 105 |
| Dehnung [%] DIN 53 571 | 141 | 152 | 156 | 181 | 200 |
| Eindruck-Härte B [N] 40 % DIN 53 576 | 111 | 128 | 119 | 99 | 91 |
| Elastizität [%] DIN 53 573 | 15 | 17 | 15 | 13 | 15 |

| | | | | | |
|---|---|---|---|---|---|
| ∗ 50 % Compression, 22 Stunden bei 70°C | | | | | |

### Beispiele 13 bis 17

Es wurde verfahren wie in den Beispielen 1 bis 7, die genauen Mengenverhältnisse der Einsatzstoffe sind in Tabelle 6 und die Kennwerte der Schaumstoffe in Tabelle 7 angegeben.

**Tabelle 6**

| Beispiel | 13 | 14 | 15 | 16 | 17 |
|---|---|---|---|---|---|
| Polyol 1 | 100,00 | 100,00 | 100,00 | 100,00 | 100,00 |
| Lupragen® N 201 | 0,74 | 0,74 | 0,74 | 0,74 | 0,74 |
| Lupragen® N 206 | 0,06 | 0,06 | 0,06 | 0,06 | 0,06 |
| Stabilisator | 1,50 | 1,50 | 2,00 | 2,00 | 2,00 |
| Wasser | 5,00 | 5,00 | 5,00 | 5,00 | 5,00 |
| Index | 100 | 100 | 90 | 80 | 110 |
| Polyol:Isocyanat¹⁾ | 95,4 | 94,4 | 85 | 75,6 | 104 |

| | | | | | |
|---|---|---|---|---|---|
| ¹) Mischungsverhältnis = 100 Gew.-Teile Polyol zu x Gew.-Teilen Isocyanat, wie in der Tabelle angegeben | | | | | |

**Tabelle 7**

| Beispiel | 13 | 14 | 15 | 16 | 17 |
|---|---|---|---|---|---|
| Dichte [kg/m³] DIN 53 420 | 27,9 | 26,2 | 27,4 | 26,5 | 32,2 |
| Stauchhärte 40% [kPa] DIN 53 577 | 3,0 | 2,9 | 2,8 | 2,1 | 3,5 |
| Druckverformungsrest [%] DIN 53 572 | 18,6 | 31,2 | 26,4 | 38,4 | 11,2 |
| Zugfestigkeit [kPa] DIN 53 571 | 108 | 102 | 120 | 102 | 103 |
| Dehnung [%] DIN 53 571 | 131 | 151 | 191 | 242 | 104 |
| Eindruck-Härte B [N] 40 % DIN 53 576 | 141 | 119 | 130 | 97 | 170 |
| Elastizität [%] DIN 53 573 | 19 | 22 | 19 | 19 | 22 |
| * 50 % Compression, 22 Stunden bei 70°C | | | | | |

### Beschreibung der eingesetzen Produkte

| | |
|---|---|
| Lupragen® N 201: | 33 %ige Lösung von Diazabicyclooctan in Dipropylenglykol |
| | |
| Lupragen® N 206: | Bis(N,N-dimethylaminoethyl)ether, 70 % Lösung in Dipropylenglycol |
| | |
| Polyol 1 | Polyesterol auf Basis Adipinsäure, Diethylenglykol und Trimethylolpropan mit einer OH-Zahl von 61 mg KOH/g; |
| | |
| Stabilisator 1 | Silicon-Polyethercopolymer, mittleres Molekulargewicht M_{w} 8000, Molekulargewicht der Polyetherkette etwa 2500, Verhältnis Ethylen-Propylen in der Polyetherkette ca. 1:1 (Tegostab ®B8418 der Firma Goldschmidt, Essen). |

## Patentansprüche

1. Verfahren zur Herstellung von Polyurethan-Weichschaumstoffen durch Umsetzung von
a) Polyisocyanaten mit
b) Verbindungen mit mindestens zwei aktiven Wasserstoffatomen in Anwesenheit von
c) Treibmitteln
d) Katalysatoren sowie
e) Hilfs- und/oder Zusatzstoffen,
**dadurch gekennzeichnet, daß** als Polyisocyanate a) Isocyanat-und Urethangruppen enthaltende Prepolymere aus Diphenylmethandiisocyanat und Polyphenylpolymethylenpolyisocyanaten und Polyetherpolyolen, als Verbindung mit mindestens zwei aktiven Wasserstoffatomen b) Polyesterpolyole sowie als Hilfs-und/oder Zusatzstoffe e) Silicon-Polyether-Copolymere, verwendet werden.

2. Verfahren nach Anspruch 1, **dadurch gekennzeichnet, daß** die Isocyanat- und Urethangruppen enthaltenden Prepolymere a) einen NCO-Gehalt von 22 bis 30 Gew.-% aufweisen.

3. Verfahren nach einem der Ansprüche 1 oder 2, **dadurch gekennzeichnet, daß** die Polyesterole b) 2 bis 4-funktionell sind.

4. Verfahren nach einem der Ansprüche 1 bis 3, **dadurch gekennzeichnet, daß** die Polyesterpolyole Molekulargewichte von 1800 bis 3600 g/mol aufweisen.

5. Verfahren nach einen der Ansprüche 1 bis 4, **dadurch gekennzeichnet, daß** die Silicon-Polyether-Copolymere aufweisende Verbindungen in einer Menge von 0,5 bis 5 Gew.-%, bezogen auf Komponente b), eingesetzt werden.

6. Verfahren nach einem der Ansprüche 1 bis 5, **dadurch gekennzeichnet, daß** die Silicon-Polyether-Copolymere aufweisenden Verbindungen e) aus einer Siloxankette mit daran angeknüpften Polyetherketten bestehen.

7. Verfahren nach einem der Ansprüche 1 bis 6, **dadurch gekennzeichnet, daß** die Silicon-Polyether-Copolymere enthaltenden Verbindungen e) ein durchschnittliches Molekulargewicht M_{w} von 8000 g/mol aufweisen.

## Claims

1. A process for producing flexible polyurethane foams by reacting
a) polyisocyanates with
b) compounds containing at least two active hydrogen atoms in the presence of
c) blowing agents
d) catalysts and also
e) auxiliaries and/or additives,
wherein prepolymers containing isocyanate and urethane groups and derived from diphenylmethane diisocyanate and polyphenylpolymethylene polyisocyanates and polyether polyols are used as polyisocyanates a), polyester polyols are used as compounds b) containing at least two active hydrogen atoms, and silicone-polyether copolymers are used as auxiliaries and/or additives e).

2. A process as claimed in claim 1, wherein the prepolymers a) containing isocyanate and urethane groups have an NCO content of from 22 to 30 % by weight.

3. A process as claimed in claim 1 or 2, wherein the polyesterols b) are 2- to 4-functional.

4. A process as claimed in any of claims 1 to 3, wherein the polyester polyols have molecular weights of from 1800 to 3600 g/mol.

5. A process as claimed in any of claims 1 to 4, wherein the compounds comprising silicone-polyether copolymers are used in an amount of from 0.5 to 5 % by weight, based on component b).

6. A process as claimed in any of claims 1 to 5, wherein the compounds e) comprising silicone-polyether copolymers comprise a siloxane chain with polyether chains linked thereto.

7. A process as claimed in any of claims 1 to 6, wherein the compounds e) comprising silicone-polyether copolymers have an average molecular weight M_{w} of 8000 g/mol.

## Revendications

1. Procédé de fabrication de mousses souples de polyuréthanne, par réaction
a) de polyisocyanates avec
b) des composés ayant au moins deux atomes d'hydrogène actifs, en présence
c) d'agents porogènes,
d) de catalyseurs, et
e) d'adjuvants et/ou additifs,
**caractérisé en ce qu'**on utilise en tant que polyisocyanates a) des prépolymères, contenant des groupes isocyanate et uréthanne, de diisocyanates de diphénylméthane et de polyphénylpolyméthylènepolyisocyanates et de polyétherpolyols, en tant que composé ayant au moins deux atomes d'hydrogène actif b) des polyesterpolyols et, en tant qu'adjuvants et/ou additifs e), des copolymères silicone-polyéther.

2. Procédé selon la revendication 1, **caractérisé en ce que** les prépolymères a) contenant des groupes isocyanate et uréthanne ont une teneur en groupes NCO de 22 à 30 % en poids.

3. Procédé selon l'une des revendications 1 ou 2, **caractérisé en ce que** les polyesterols b) sont 2 à 4-fonctionnels.

4. Procédé selon l'une des revendications 1 à 3, **caractérisé en ce que** les polyesterpolyols ont une masse moléculaire de 1800 à 3600 g/mol.

5. Procédé selon l'une des revendications 1 à 4, **caractérisé en ce que** les composés comportant des copolymères silicone-polyéther sont utilisés en une quantité de 0,5 à 5 % en poids par rapport au composant b).

6. Procédé selon l'une des revendications 1 à 5, **caractérisé en ce que** les composés e) comportant des copolymères silicone-polyéther sont constitués d'une chaîne siloxane, à laquelle sont reliées des chaînes polyéther.

7. Procédé selon l'une des revendications 1 à 6, **caractérisé en ce que** les composés e) contenant des copolymères silicone-polyéther ont une masse moléculaire moyenne M_{w} de 8000 g/mol.
